# EUROPEAN PATENT SPECIFICATION

(11) **EP 2 795 170 B1**
(45) Date of publication and mention of the grant of the patent: **12.12.2018**
(21) Application number: 12823081.0
(22) Date of filing: 21.12.2012
(51) Int. Cl.: F16K 31/60, E03C 1/04

(54) **FAUCET COMPRISING MAGNETIC MEANS FOR HOLDING THE HANDLE IN A PRE-DETERMINED POSITION**
MISCHBATTERIE MIT MAGNETISCHER VORRICHTUNG ZUM HALTEN DES GRIFFS IN EINER VORBESTIMMTEN POSITION
ROBINET COMPORTANT UN MOYEN MAGNÉTIQUE PERMETTANT DE MAINTENIR LA POIGNÉE DANS UNE POSITION PRÉDÉTERMINÉE

(30) Priority: 23.12.2011 GB 201122230
(43) Date of publication of application: 29.10.2014
(73) Proprietor: Kohler Mira Ltd, Cheltenham Gloucestershire GL52 5EP (GB)
(72) Inventor: FEARNLEY, Karl Antony, Portishead, Somerset BS20 7FL (GB); JONES, Oliver Philip, Tuffley, Gloucestershire GL4 0DQ (GB); KINGTON, Gary, Bristol, Somerset BS14 0AJ (GB)
(74) Representative: Barker Brettell LLP
(86) International application number: PCT/GB2012/053262
(87) International publication number: WO 2013/093521

(56) References cited:
- CN-U- 201 866 390
- FR-A- 1 350 034
- US-A1- 2011 100 478

## Description

The present invention relates to plumbing fixtures. More particularly the invention relates to faucets.

Faucets are known having separate handles for controlling the flow and temperature of water delivered to an outlet. Faucets are also known having a single handle for controlling both the flow and temperature of water delivered to an outlet. The handle for controlling the flow is typically movable from a "closed" position in which flow is prevented to an "open" position in which flow is permitted and may be adjustable between the "closed" position and a full "open" position to vary the flow rate. In some faucet designs the "closed" position may be chosen so that the handle complements another feature of the faucet. For example the outlet may be provided by a spout and the handle may be arranged to align with the spout in the "closed" position. Such alignment may provide a visual indication for returning the handle to the "closed" position and may enhance the aesthetic appearance of the faucet in the "closed" position. This requires the user to return the handle to the aligned position. A faucet according to the preamble of claim 1 is known from CN-A-201866390U.
The present invention has been made from a consideration of the foregoing.
According to a first aspect of the invention, there is provided a faucet as defined in claim 1. Other features of the faucet are the subject of claims 2 to 10.
The invention will now be described in more detail by way of example only wherein:
**FIGURE 1** is a perspective view of a faucet according to a first embodiment of the invention with a handle of the faucet in the closed position;
**FIGURE 2** is a side view of the faucet shown in Figure 1 with the handle in the closed position;
**FIGURE 3** is a sectional view of the faucet shown in Figures 1 and 2 with the handle in the closed position;
**FIGURE 4** is a sectional view of the faucet shown in Figures 1 and 2 with the handle in the open position;
**FIGURE 5** is a side view, partly in section, of a faucet according to a second embodiment of the invention with the handle in the closed position; and
**FIGURE 6** is a side view, partly in section, of the faucet shown in Figure 5 with the handle in the open position.

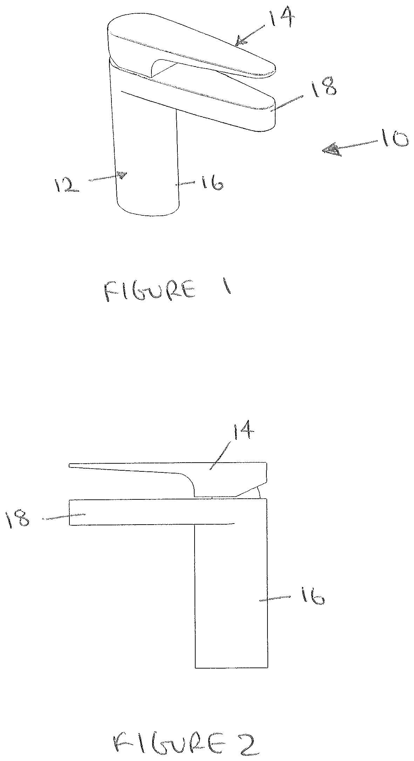

Referring to Figures 1 to 4 of the accompanying drawings, a first embodiment of a faucet 10 according to the invention is shown. The faucet 10 includes a body 12 and a handle 14. The body 12 has a base 16 and a spout 18. The base 16 is adapted to be mounted on a plumbing fixture such as a basin or sink and has separate inlet passageways 20 (one only shown) connectable to hot and cold water supplies (not shown).

A valve assembly 22 is received in a counterbore 24 in the upper end of the base 16 and is connected to the inlet passageways 20 to receive hot and cold water from the supplies. The spout 18 extends transverse to the base 16 and has an outlet passageway (not shown) leading from the valve assembly 22 to an outlet (not shown) at the distal end of the spout 18.

The valve assembly 22 may comprise a valve cartridge 26. The valve cartridge 26 may have a movable valve member and a stationary valve member (not shown). In this embodiment, the valve members can comprise ceramic discs but this is not essential. The movable valve member is operably coupled to a valve stem 28 and the handle 14 is mounted on the stem 28. The handle 14 is manually operable by a user to move the movable valve member relative to the stationary valve member for controlling the flow and temperature of water delivered to the spout 18 for discharge from the outlet.

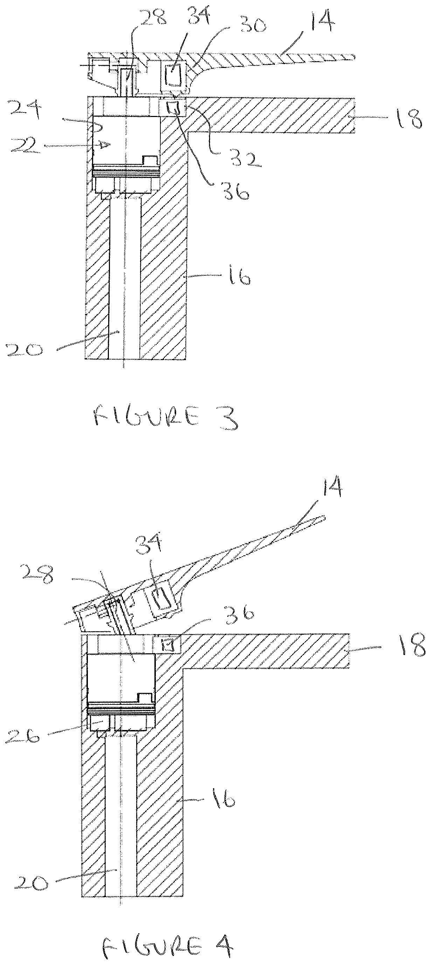

The handle 14 is pivotal about a first axis transverse to the longitudinal axis of the valve cartridge 26 between a closed position shown in Figures 1 to 3 and an open position shown in Figure 4. In the closed position, the stem 28 is aligned with a longitudinal axis of the valve cartridge 26 and the valve members are positioned so that openings (not shown) in the valve members are misaligned to prevent flow of water to the outlet. In the open position, the stem 28 is tilted relative to the longitudinal axis of the valve cartridge 26 and the valve members are positioned so that the openings in the valve members are aligned to allow flow of water to the outlet. The handle 14 is shown in the full open position in Figure 4 providing maximum flow of water to the outlet. The handle 14 can be positioned in one or more intermediate open positions between the closed position of Figure 3 and the full open position of Figure 4 to vary the overlap of the openings in the valve members for controlling the flow rate of water delivered to the outlet.

The handle 14 is also rotatable about a second axis perpendicular to the first axis and parallel to the longitudinal axis of the valve cartridge 26 in the closed position of Figure 3, the full open position of Figure 4 and any intermediate open position to adjust the position of the movable valve member so that the overlap of the openings controlling flow of hot water and the openings controlling flow of cold water are altered to vary the relative proportions of hot and cold water delivered to the outlet for controlling the temperature of water discharged from the outlet. In the closed position shown in Figures 1 to 3 the handle 14 is aligned with the spout 18 in a centre position and the valve members are positioned to deliver a mixture of hot and cold water to the outlet if the handle 14 is raised from the centre closed position without rotating the handle 14. Rotating the handle 14 to one side of the centre position increases the flow of cold water and reduces the flow of hot water to lower the temperature of the water discharged from the outlet and rotating the handle 14 to the other side of the centre position reduces the flow of cold water and increases the flow of hot water to raise the temperature of the water discharged from the outlet. The handle 14 is rotatable from the centre position to end positions on either side of the centre position corresponding to flow of cold water only and hot water only and to any intermediate positions to vary the temperature of water delivered to the outlet.

In operation, the user lifts and rotates the handle 14 relative to the base 16 to select a desired flow rate and temperature of water discharged from the outlet. To shut-off flow of water from the outlet at the end of operation, the user is meant to lower and rotate the handle 14 to return the handle 14 to the centre closed position shown in Figures 1 to 3 with the handle 14 aligned with the spout 18. It can happen, however that the user fails to lower the handle 14 sufficiently to fully shut-off the flow of water and/or to rotate the handle 14 sufficiently to align the handle 14 with the spout 18. This can result in escape of water when the faucet 10 is not in use which is undesirable, especially if as is increasingly common, the water supply is metered and/or can result in the faucet 10 having an unsightly appearance when not in use and/or can result in the faucet being left in a position where lifting the handle will result in discharge of hot water only with a risk of the user being scalded by discharge of very hot water from the outlet.

According to the exemplary embodiment of Figures 1 to 4 these problems and disadvantages are overcome or at least mitigated by providing magnetic means for holding the handle 14 in the centre closed position until the faucet is next used and/or for returning the handle 14 to the centre closed position if the user does not return the handle to the centre closed position after use.

As best shown in Figure 3, a recess 30 is provided in the underside of the handle 14 at or near the proximal end where the handle 14 is mounted on the stem 28 of the valve assembly 24 and a recess 32 is provided in the upper end of the base 16 that aligns with the recess 30 when the handle 14 is in the centre closed position aligned with the spout 18. Magnets 34, 36 are mounted in the recesses 30, 32 and generate a magnetic attraction force that holds the handle 14 in the centre closed position aligned with the spout 18 until the user lifts and/or rotates the handle 14 away from the centre closed position to operate the faucet 10 as described previously. The strength and/or configuration of the magnets may be chosen so that, when the user lifts and/or rotates the handle 14 away from the centre "closed" position, the magnetic attraction force reduces and may be overcome completely so that the handle 14 remains in the position set by the user for discharge of water having a selected flow rate and temperature for most adjusted positions of the handle 14. As the user returns the handle 14 to the centre closed position, the magnetic attraction force increases so that if the user releases the handle 14 before it is returned fully to the centre closed position, the handle 14 returns automatically to the centre closed position under the magnetic attraction force of the magnets 34, 36.

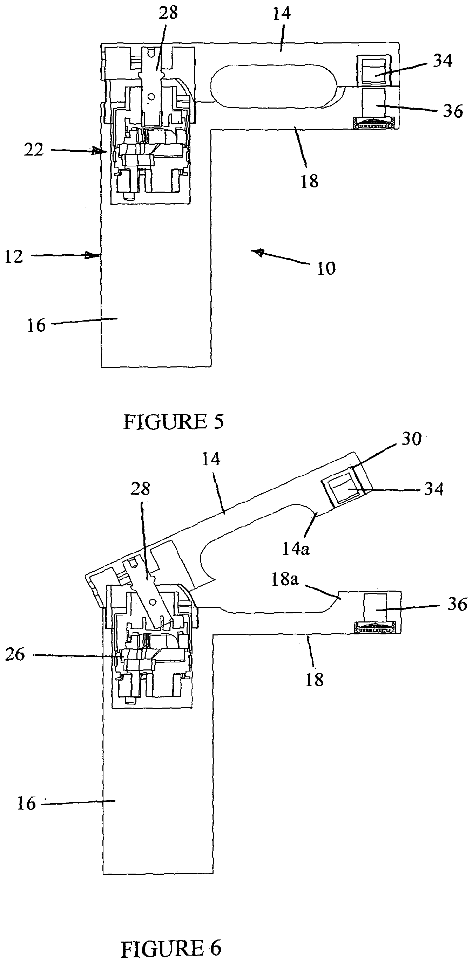

Referring now to Figures 5 and 6, a second embodiment of a faucet according to the invention is shown in which parts similar to the first embodiment are indicated by the same reference numerals and are not described in detail as their construction and operation will be apparent to those skilled in the art from the description of the first embodiment.

In this second embodiment, the handle 14 and spout 18 are modified so that, in the centre closed position shown in Figure 5, the distal ends of the handle 14 and spout 18 are preferably configured to abut one another. More specifically, the handle 14 has a formation 14a on the underside and the spout 18 has a formation 18a on the topside that preferably meet one another in the centre closed position. In this embodiment, the handle 14 and spout 18 are provided with magnets 34, 36 located in recesses 30, 32 in the formations 14a, 18a at the distal ends of the handle 14 and spout 18. The magnetic attraction force generated by the magnets 34, 36 holds the handle 14 in the centre closed position aligned with the spout 18 when the faucet 10 is not in use and allows the handle 14 to return automatically to the centre closed position if the user releases the handle 14 before it is returned fully to the centre closed position after use. As can be seen from Figure 6, positioning the magnets 34, 36 at the distal ends of the handle 14 and spout 18 increases the spacing between the magnets 34, 36 in the open position compared to the previous embodiment. As a result, it may be possible to employ stronger magnets providing a greater magnetic attraction force to hold the handle 14 in the centre closed position and to return the handle 14 to the centre closed position compared to the first embodiment without any adverse effect on the faucet when in use.

In a modification (not shown), we may provide a faucet having a first pair of magnets at the distal ends of the handle 14 and spout 18 as shown in Figure 5 and 6 and a second pair of magnets at the proximal end of the handle 14 and the base 16 as shown in Figures 3 and 4.

In another modification (not shown), we may provide additional means to hold the handle in the centre closed position that can act to assist the magnetic means and may remove the effect of any tolerances between the handle, the body and the magnet(s). For example, such additional means may serve to hold the handle in the centre closed position by mechanical means and/or by friction means.

In the above-described embodiments, the magnets 34, 36 are preferably permanent magnets. The magnets 34, 36 may be made of any suitable materials, for example iron or steel or rare earth metals or alloys. The magnets 34, 36 may be provided with a protective coating or layer of plastics, paint or other suitable material to protect the magnets from moisture or humidity. In a modification (not shown), one of the handle 14 and base 16 or spout 18 may be provided with a magnet and the other of the handle 14 and base 16 or spout 18 may be made from a magnetically attractive material or provided with a magnetically attractive element.
In the above-described embodiments, the handle 14 is held in a centre closed position by the magnets 34, 36 and the handle can be lifted to control flow and rotated in both directions to either side of the centre closed position to control temperature. In a modification (not shown), the handle 14 may be held in a closed position and may be lifted to control flow and rotated in one direction to one side of the closed position to control temperature. In another modification (not shown), the handle may be lifted to control temperature and rotated to control flow.

In the above-described embodiments, the closed position corresponds to a position in which the handle 14 is aligned with the spout 18. In a modification, the closed position may correspond to a different position of the handle 14 relative to the spout 18 or an outlet if the faucet does not have a spout.

The above-described embodiments illustrate ways in which the invention can be put into practice and are not exhaustive of all possible ways of practicing the invention. Accordingly, the embodiments are not limiting on the scope of the invention and it will be understood that various modifications can be made without departing from the principles and concepts of the invention as defined in the appended claims.

For example, the magnetic attraction force to hold the handle in the centre closed position in the exemplary embodiments may be generated by one or more appropriately positioned pairs of magnets as described or by any other means for creating a magnetic attraction force such as one or more pairs of a magnet and a magnetically attractive material or element, or one or more electromagnets.
While the invention has been described in the exemplary embodiments for a faucet having a handle to control both flow and temperature of water delivered to an outlet, the invention could have application to faucets in which
- the handle controls flow only in a faucet connected to a cold water supply only or a hot water supply only
- the handle controls temperature only in a faucet connected to supplies of hot and cold water for delivering cold water and hot water in variable amounts to an outlet with separate means for controlling flow rate
- the handle controls flow only in a faucet connected to supplies of hot and cold water for delivering cold water and hot water in variable amounts to an outlet with separate means for controlling temperature
Faucets according to the invention may comprise taps for basins, sinks, baths or bidets. Alternatively, faucets according to the invention may comprise mixers for showers.

## Claims

1. A faucet including a body (12) having a valve assembly (22) and a handle (14) operably coupled to the valve assembly (22) for controlling flow of water through the faucet, and magnetic means (34,36) for holding the handle (14) in a closed position preventing flow of water through the faucet, wherein the magnetic means provides a magnetic attraction force that holds the handle in the closed position and the handle (14) is movable to an open position allowing flow of water through the faucet by a user, the faucet being **characterized in that** the magnetic attraction force is operable to return the handle (14) to the closed position for part only of a range of movement of the handle (14) so that the handle (14) returns to the closed position if released within the operable range of the magnetic means (34, 36) and can be moved to an open position beyond the operable range of the magnetic means (34, 36) and released without returning to the closed position.

2. The faucet of claim 1 wherein the operable range is controlled by strength and/or position of the magnetic means (34, 36).

3. The faucet of any preceding claim wherein the magnetic means (34, 36) comprises at least one pair of magnets, wherein one magnet (34) is on the faucet handle (14) and the other magnet (36) is on the faucet body (12) such that the magnets (34, 36) interact to generate a magnetic attraction force in the closed position.

4. The faucet of claim 1 or claim 2 wherein the magnetic means (34, 36) comprises a magnet on one of the faucet handle and faucet body and the other of the faucet handle and faucet body is made of or has an element of magnetically attractive material such that the magnet and magnetically attractive material interact to generate a magnetic attraction force in the closed position.

5. The faucet of any preceding claim wherein the faucet has a spout (18) for discharge of water.

6. The faucet of claim 5 wherein the handle (14) is aligned with the spout (18) in the closed position.

7. The faucet of claim 5 or claim 6 wherein the handle (14) is pivotal about a first axis to control flow and rotatable about a second axis perpendicular to the first axis for controlling temperature of water discharged from the spout (18).

8. The faucet of claim 3 wherein a pair of magnets (34, 36) are arranged at a proximal end of the faucet handle (14) and a base of the faucet body (12).

9. The faucet of claim 3 wherein a pair of magnets (34, 36) are arranged at a distal end of the faucet handle (14) and a faucet spout (18).

10. The faucet of claim 3 wherein a first pair of magnets (34, 36) is arranged at a proximal end of the faucet handle and a base of the faucet body and a second pair of magnets (34, 36) is arranged at a distal end of the faucet handle and a faucet spout.

## Patentansprüche

1. Wasserhahn, aufweisend einen Körper (12) mit einer Ventilanordnung (22) und einem Griff (14), der mit der Ventilanordnung (22) zur Steuerung des Wasserflusses durch den Wasserhahn wirkverbunden ist, und magnetische Vorrichtungen (34, 36) zum Halten des Griffs (14) in einer geschlossenen Position, die einen Wasserfluss durch den Wasserhahn verhindert, wobei die magnetischen Vorrichtungen eine magnetische Anziehungskraft bereitstellen, die den Griff in der geschlossenen Position halten und wobei der Griff (14) in eine offene Position bewegbar ist, die den Wasserfluss durch den Wasserhahn durch einen Benutzer des Wasserhahns zulässt, **dadurch gekennzeichnet, dass**
die magnetische Anziehungskraft betätigt werden kann, um den Griff (14) nur für einen Teil eines Bewegungsbereichs des Griffs (14) in die geschlossene Position zurückzubringen, so dass der Griff (14) in die geschlossene Position zurückkehrt, wenn er innerhalb des Betriebsbereichs der magnetischen Vorrichtungen (34, 36) freigegeben wird, und zu einer offenen Position über den Betriebsbereich der magnetischen Vorrichtungen (34, 36) hinaus bewegt und freigegeben werden kann, ohne zu der geschlossenen Position zurückzukehren.

2. Wasserhahn nach Anspruch 1, wobei der Betriebsbereich durch Stärke und/oder Position der magnetischen Vorrichtungen (34, 36) gesteuert wird.

3. Wasserhahn nach einem der vorhergehenden Ansprüche, wobei die magnetischen Vorrichtungen (34, 36) mindestens ein Paar von Magneten umfassen, wobei sich ein Magnet (34) an dem Wasserhahngriff (14) und der andere Magnet (36) an dem Wasserhahnkörper (12) befindet, sodass die Magneten (34, 36) zusammenwirken, um eine magnetische Anziehungskraft in der geschlossenen Position zu erzeugen.

4. Wasserhahn nach Anspruch 1 oder Anspruch 2, wobei die magnetischen Vorrichtungen (34, 36) jeweils einen Magneten an dem Wasserhahngriff oder am Wasserhahnkörper umfassen und der andere von Wasserhahngriff und Wasserhahnkörper ein Element aus magnetisch anziehendem Material aufweist oder daraus hergestellt ist, sodass der Magnet und das magnetisch anziehende Material zusammenwirken, um eine magnetische Anziehungskraft in der geschlossenen Position zu erzeugen.

5. Wasserhahn nach einem der vorhergehenden Ansprüche, wobei der Wasserhahn einen Auslauf (18) zum Ablassen von Wasser aufweist.

6. Wasserhahn nach Anspruch 5, wobei der Griff (14) in der geschlossenen Position mit dem Auslauf (18) ausgerichtet ist.

7. Wasserhahn nach Anspruch 5 oder Anspruch 6, wobei der Griff (14) um eine erste Achse schwenkbar ist, um den Fluss zu steuern, und um eine zweite Achse senkrecht zur ersten Achse drehbar ist, um die Temperatur des Wassers zu steuern, das aus dem Auslauf (18) abgegeben wird.

8. Wasserhahn nach Anspruch 3, wobei ein Paar von Magneten (34, 36) an einem proximalen Ende des Wasserhahngriffs (14) und einer Basis des Wasserhahnkörpers (12) angeordnet ist.

9. Wasserhahn nach Anspruch 3, wobei ein Paar von Magneten (34, 36) an einem distalen Ende des Wasserhahngriffs (14) und einem Wasserhahnauslauf (18) angeordnet ist.

10. Wasserhahn nach Anspruch 3, wobei ein erstes Paar von Magneten (34, 36) an einem proximalen Ende des Wasserhahngriffs und einer Basis des Wasserhahnkörpers angeordnet ist und ein zweites Paar von Magneten (34, 36) an einem distalen Ende des Wasserhahngriffs und eines Wasserhahnauslaufs angeordnet ist.

## Revendications

1. Robinet comprenant un corps (12) présentant un ensemble de soupape (22) et une poignée (14) couplée de façon opérationnelle à l'ensemble de soupape (22) pour commander un écoulement d'eau à travers le robinet, et des moyens magnétiques (34, 36) pour maintenir la poignée (14) dans une position fermée pour empêcher tout écoulement d'eau à travers le robinet, dans lequel les moyens magnétiques génèrent une force d'attraction magnétique qui maintient la poignée (14) dans la position fermée et la poignée (14) est déplaçable dans une position ouverte afin de permettre un écoulement d'eau à travers le robinet par un utilisateur, le robinet étant **caractérisé en ce que** la force d'attraction magnétique est utilisable pour replacer la poignée (14) dans la position fermée pour une partie seulement d'une plage de déplacement de la poignée (14) de telle sorte que la poignée (14) retourne dans la position fermée si elle est relâchée à l'intérieur de la plage opérationnelle des moyens magnétiques (34, 36) et peut être déplacée dans une position ouverte au-delà de la plage opérationnelle des moyens magnétiques (34, 36) et relâchée sans retourner dans la position fermée.

2. Robinet selon la revendication 1, dans lequel la plage opérationnelle est commandée par la puissance et/ou la position des moyens magnétiques (34, 36).

3. Robinet selon l'une quelconque des revendications précédentes, dans lequel les moyens magnétiques (34, 36) comprennent au moins une paire d'aimants, dans lequel un premier aimant (34) est situé sur la poignée (14) du robinet, et l'autre aimant (36) est situé sur le corps (12) du robinet de telle sorte que les aimants interagissent pour générer une force d'attraction magnétique dans la position fermée.

4. Robinet selon la revendication 1 ou la revendication 2, dans lequel les moyens magnétiques comprennent un aimant sur un parmi la poignée du robinet et le corps du robinet, et l'autre parmi la poignée du robinet et le corps du robinet est constitué de ou comprend un élément d'un matériau magnétiquement attractif de telle sorte que l'aimant et le matériau magnétiquement attractif interagissent pour générer une force d'attraction magnétique dans la position fermée.

5. Robinet selon l'une quelconque des revendications précédentes, dans lequel le robinet comprend un bec (18) pour décharger de l'eau.

6. Robinet selon la revendication 5, dans lequel la poignée (14) est alignée avec le bec (18) dans la position fermée.

7. Robinet selon la revendication 5 ou la revendication 6, dans lequel la poignée (14) est pivotante autour d'un premier axe pour commander un écoulement et est rotative autour d'un second axe perpendiculaire au premier axe pour commander la température de l'eau déchargée à travers le bec (18).

8. Robinet selon la revendication 3, dans lequel une paire d'aimants (34, 36) sont agencés à une extrémité proximale de la poignée (14) du robinet et d'une base du corps (12) du robinet.

9. Robinet selon la revendication 3, dans lequel une paire d'aimants (34, 36) sont agencés à une extrémité distale de la poignée (14) du robinet et d'un bec de robinet (18).

10. Robinet selon la revendication 3, dans lequel une première paire d'aimants (34, 36) est agencée à une extrémité proximale de la poignée du robinet et d'une base du corps du robinet, et une seconde paire d'aimants (34, 36) est agencée à une extrémité distale de la poignée du robinet et d'un bec de robinet.
